(19) **Europäisches Patentamt / European Patent Office / Office européen des brevets**

(11) **EP 2 161 172 B1**

(12) **EUROPEAN PATENT SPECIFICATION**

(45) Date of publication and mention
of the grant of the patent:
**25.05.2011 Bulletin 2011/21**

(51) Int Cl.:
***B60T 8/17*** *(2006.01)* ***B60T 8/26*** *(2006.01)*
***B60T 8/32*** *(2006.01)*

(21) Application number: **09179036.0**

(22) Date of filing: **29.03.2007**

(54) **Brake control device for motorcycle**

Bremskontrollvorrichtung für ein Motorrad

Dispositif de commande de frein pour motocyclette

(84) Designated Contracting States:
**DE ES GB IT**

(30) Priority: **31.03.2006 JP 2006100882**

(43) Date of publication of application:
**10.03.2010 Bulletin 2010/10**

(62) Document number(s) of the earlier application(s) in
accordance with Art. 76 EPC:
**07006540.4 / 1 842 755**

(73) Proprietor: **NISSIN KOGYO CO., LTD.**
**Ueda-shi**
**Nagano (JP)**

(72) Inventor: **Hasegawa, Tetsuya**
**c/o NISSIN KOGYO CO.,LTD**
**Ueda-shi,**
**Nagano, (JP)**

(74) Representative: **HOFFMANN EITLE**
**Patent- und Rechtsanwälte**
**Arabellastraße 4**
**81925 München (DE)**

(56) References cited:
**EP-A- 0 524 821          EP-A- 0 778 189**
**US-A1- 2003 066 720**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### 1. Field of the Invention

The present invention is related to a brake control device for a motorcycle that prevents a wheel of the motorcycle from being locked at the time of braking operation.

### 2. Description of Related Art

There is known a brake control system using an ABS system to prevent a so-called "rear wheel lift-up (also referred to as rear wheel load releasing, jackknife, or rear lift-up)" that load applied to wheels is shifted from a rear wheel to a front wheel so that a rear wheel is lifted up at the time of braking a vehicle, particularly, at the time of strongly decelerating the vehicle.

In a conventional brake operating unit for motorcycle, a generation of the phenomenon, in which the rear wheel is lifted up, is judged when a provisional body speed is not less than a predetermined value after the provisional body speed has been calculated by selecting a higher wheel speed from the front wheel speed and the rear wheel speed. Concerning this matter, refer to Japanese Patent Unexamined Publication JP-A-2002-29403.

US 2003/066720 A1 is concerned with a method for detecting lifting of rear wheel and method for controlling braking, of two wheeled vehicle. EP 0 524 821 A2 is concerned with a method of and system for controlling brakes.

In general, in the motorcycle, a rear wheel is driven. Therefore, a state of driving the rear wheel is variously changed by the operation of a rider, for example, by operating a rear brake, a clutch, a gear position and so forth. Accordingly, when a provisional body speed is calculated by referring to both the front wheel speed and the rear wheel speed in the same manner as that of the conventional brake control device for a motorcycle, a result of the judgment tends to deviate. Accordingly, there is a possibility that a sufficiently high judgment accuracy can not be obtained.

### SUMMARY OF THE INVENTION

The present invention has been accomplished in view of the above circumstances. It is a task of the present invention to provide a brake control device for a motorcycle capable of enhancing accuracy of judging rear wheel lift-up while accuracy of ABS control is being maintained.

In order to solve the above problems, according to the invention, there is provided a brake control device according to claim 1.

On a downward slope, the deceleration limit, at which the rear wheel is lifted up, is decreased as compared with the deceleration limit on a flat passage. That is, in order to prevent the rear wheel from being lifted up on the downward slope, it is necessary to reduce the reference deceleration to be lower than that in the case of the flat passage.

However, it is impossible to judge from the front wheel speed and the rear wheel speed whether the motorcycle is running on the flat passage or the motorcycle is running on the downward slope at present. Therefore, in order to suppress a rear wheel lift-up on the downward hill, it is necessary to give consideration to an influence of the downward hill and previously set the reference deceleration at a lower value. However, when the reference deceleration is set in this way, on the flat passage, a reduction in speed can be made only by a deceleration considerably lower than the deceleration limit of the generation of a rear wheel lift-up.

Due to the above constitution, the longitudinal direction acceleration obtaining unit obtains a sum of an actual deceleration in the gradient face direction of the motorcycle and a component in the gradient face direction of gravity (including gravity acting on the rider) acting on the motorcycle. A value obtained by the longitudinal direction acceleration obtaining unit at the time of running of the motorcycle on the downward slope at the deceleration limit of a rear wheel lift-up is substantially equal to a value obtained by the longitudinal direction acceleration obtaining unit at the time of running of the motorcycle on the flat passage at the deceleration limit of a rear wheel lift-up. Accordingly, even when a plurality of reference declarations are not set according to the gradient of a road surface, while accuracy of ABS control is being maintained high, accuracy of judging a rear wheel lift-up can be enhanced. Further, a high deceleration on a flat road surface and a suppression of a rear wheel lift-up on a downward slope can be compatible with each other.

According to the brake control device for a motorcycle of the present invention, while accuracy of ABS control is being maintained high, it is possible to enhance accuracy of judging a rear wheel lift-up.

According to an example, there is provided a brake control device for a motorcycle comprising:

a front wheel speed obtaining unit that obtains a front wheel speed;
a rear wheel speed obtaining unit that obtains a rear wheel speed;
an estimated motorcycle speed calculation unit that calculates an estimated motorcycle speed by using the obtained front wheel speed and rear wheel speed;

an estimated vehicle body deceleration calculation unit that calculates an estimated vehicle body deceleration by using only the obtained front wheel speed as a speed element;

an ABS control unit that suppresses slippage of the front wheel and the rear wheel at the time of braking operation according to the calculated estimated motorcycle speed;

a rear wheel lift-up judgment unit-that judges that there are any possibilities of the rear wheel being lifted when a state, where the calculated estimated vehicle body deceleration is higher than a reference deceleration, lasts for a period of time longer than a reference period of time; and

a front wheel braking force control unit that reduces a braking force of the front wheel when it is judged that the possibility of the rear wheel being lifted.

According to the above constitution, it is judged whether or not at least the rear wheel is lifted up only by the front wheel speed. Therefore, it is possible to exclude an influence of the rear wheel speed which tends to be changed by the operation conducted by a rider and it is possible to enhance accuracy of judging a rear wheel lift-up. On the other hand, ABS control is conducted by using the estimated motorcycle speed which is based on the front wheel speed and the rear wheel speed. Accordingly, while accuracy of ABS control is being maintained, accuracy of judging a rear wheel lift-up can be enhanced.

According to a second example, as set forth in the first example, it is preferable that the estimated vehicle body deceleration calculation unit comprising:

a front wheel speed storing unit that stores the obtained front wheel speed for each cycle longer than a predetermined control cycle; and

an estimated vehicle body deceleration calculation portion that calculates an estimated vehicle body deceleration of this time by using a front wheel speed obtained in this time and a front wheel speed obtained in previous time stored in the front wheel speed storing unit,

wherein the rear wheel lift-up judgment unit repeatedly conducts judgment according to the predetermined control cycle.

Due to the above constitution, since the estimated vehicle body deceleration is calculated according to the front wheel speed of the past stored for each cycle longer than the control cycle, it is possible to suppress an influence of an instantaneous change in the front wheel speed and control can be made by using an appropriately stable estimated vehicle body deceleration.

According to a third example, it is preferable that the brake control device as set forth in the first or second aspect of the invention, further comprising:

a judging reference change unit that changes the reference time to be short or changing the reference deceleration to be a low deceleration when the calculated estimated vehicle body deceleration is higher than the reference deceleration.

The higher the estimated vehicle body deceleration is, the stronger force acts on the motorcycle to lift up the rear wheel. In this case, it is necessary to quickly conduct controlling for suppressing the rear wheel from being lifted up.

Due to the above constitution, the higher the estimated vehicle body deceleration is than the reference deceleration, the shorter the reference time is changed. Alternatively, since the reference deceleration is changed to a low deceleration, it is judged early whether or not there is a possibility of rear wheel lift-up and it is possible to quickly realize the control of suppressing a rear wheel lift-up.

BRIEF DESCRIPTION OF THE DRAWINGS

Fig. 1 is an arrangement view showing a motorcycle provided with a brake control device for a motorcycle of the first embodiment of the present invention;

Fig. 2 is a hydraulic circuit diagram of brake fluid of the brake control device for a motorcycle;

Fig. 3 is a block diagram showing a brake operating unit for motorcycle of the first embodiment of the present invention;

Fig. 4 is a block diagram showing an estimated vehicle body deceleration calculation unit in detail;

Fig. 5 is a time chart for explaining a method of controlling a braking force of a front wheel by a control unit of the first embodiment of the present invention;

Fig. 6 is a time chart for explaining a method of calculating an estimated vehicle body deceleration by a control unit of the first embodiment of the present invention;

Fig. 7 is an arrangement view showing a motorcycle provided with a brake control device for a motorcycle of the second embodiment of the present invention;

Fig. 8 is a block diagram showing a brake control device for a motorcycle of the second embodiment of the present invention;

Fig. 9 is a schematic illustration showing a state in which a motorcycle of the second embodiment runs on a downward slope;

Fig. 10 is a graph showing a relation between a limit acceleration of generating a rear wheel lift-up on a flat road and a detection value of the longitudinal direction acceleration sensor at the time of the limit of generating a rear wheel lift-up on a downward slope; and

Fig. 11 is a time chart showing an example of control conducted by the control unit of the second embodiment.

## DETAILED DESCRIPTION OF EXEMPLARY EMBODIMENTS OF THE INVENTION EMBODIMENTS

### FIRST EMBODIMENT

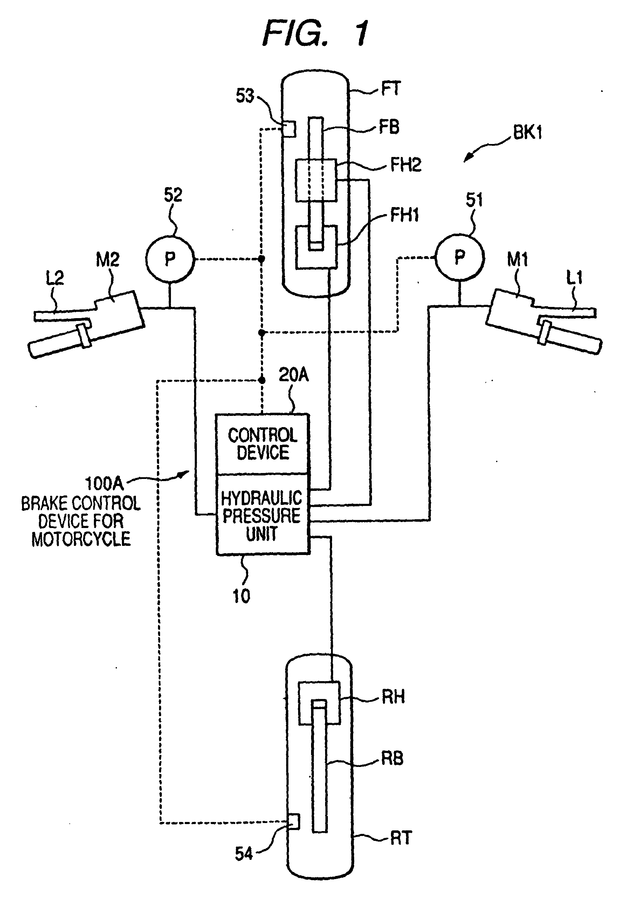

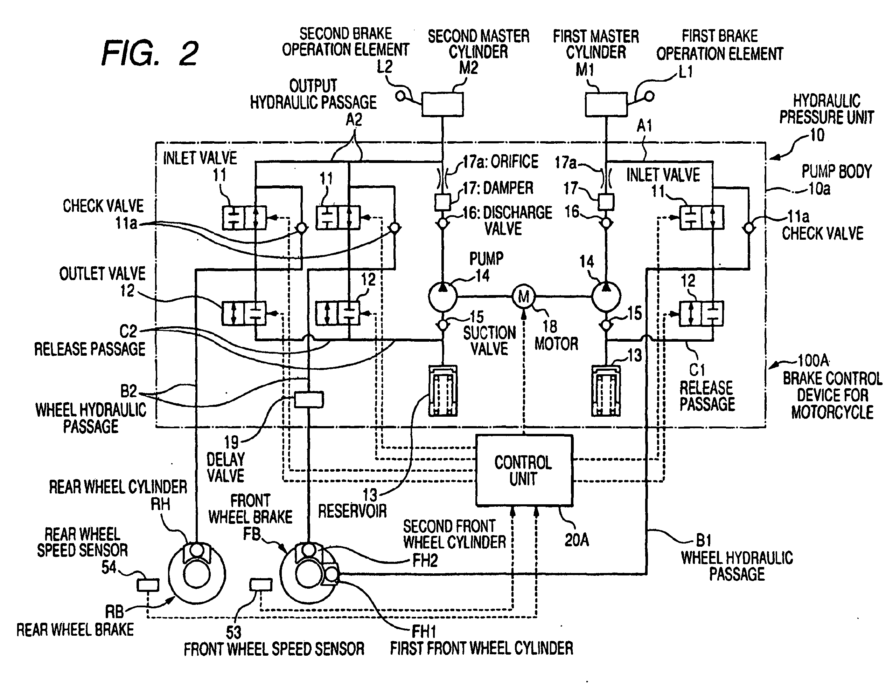

Referring to the accompanying drawings appropriately, an embodiment of the present invention will be explained in detail below. Like reference characters are used to indicate like parts and the duplicate explanations are omitted here. In the drawings to be referred, Fig. 1 is an arrangement view showing a motorcycle provided with a brake control device for a motorcycle of the first embodiment of the present invention. Fig. 2 is a hydraulic circuit diagram of brake fluid of the brake control device for a motorcycle.

As shown in Fig. 1, a brake control device for the motorcycle 100A is to properly control a brake force (brake hydraulic pressure) applied to a front wheel FT and a rear wheel RT (hereinafter, also may be referred to as a wheel FT and a wheel RT) of a vehicle BK1. The control device mainly includes a hydraulic pressure unit 10 provided with oil passages (flow passages for a brake fluid) and various components, and a control device 20A properly controlling the various components in the hydraulic pressure unit 10.

The control device 20A in the brake control device for the motorcycle 100A is connected to: (1) a first pressure sensor 51 and a second pressure sensor 52 (hereinafter, also may be referred to as a pressure sensor 51 and a pressure sensor 52) detecting brake hydraulic pressures (first master cylinder pressure and second master cylinder pressure) generated in a first master cylinder M1 and a second master cylinder M2; and (2) a front wheel speed sensor 53 and a rear wheel speed sensor 54 (hereinafter, also may be referred to as wheel speed sensors 53 and 54) detecting wheel speeds (front wheel speed $V_F$ and rear wheel speed $V_R$) of the front wheel FT and the rear wheel RT.

The control device 20A includes, for example, a CPU, a RAM, a ROM and an input/output circuit to perform calculation processes on the basis of inputs from the pressure sensors 51 and 52 and the wheel speed sensors 53 and 54 and data and programs stored in the ROM so that control operations are performed.

A first front wheel cylinder FH1 is a hydraulic device converting the brake hydraulic pressure generated in the first master cylinder M1 and the brake control device for the motorcycle 100A to an operation force for a front wheel brake (a front wheel brake mechanism) FB provided in the front wheel FT. A second front wheel cylinder FH2 is a hydraulic device converting the brake hydraulic pressure generated by the second master cylinder M2 and the brake control device for the motorcycle 100A to the operation force for the front wheel brake FB provided in the front wheel FT. A rear wheel cylinder RH is a hydraulic device converting the brake hydraulic pressure generated by the second master cylinder M2 and the brake control device for the motorcycle 100A to the operation force for a rear wheel brake (a rear wheel brake mechanism) RB provided in the rear wheel RT. The front wheel cylinder FH1, the second front wheel cylinder FH2 and the rear wheel cylinder RH are connected to the hydraulic pressure unit 10 of the brake control device for the motorcycle 100A via respective pipe lines.

### HYDRAULIC PRESSURE UNIT 10

As shown in Fig. 2, the hydraulic pressure unit 10 of the brake control device for the motorcycle 100A is disposed between the first master cylinder M1 and the second master cylinder M2 generating the brake hydraulic pressure in response to a force applied to a first brake operation element L1 and a second brake operation element L2 by a rider. The hydraulic pressure unit 10 includes the front wheel brake FB and the rear wheel brake RB, and is configured to include a pump body 10a which is a base body having oil passages in which the brake fluid flows and a plurality of inlet valves 11 and outlet valves 12 disposed in the fluid passages.

The first master cylinder M1 is connected to an output hydraulic passage A1 formed in the pump body 10a, and a wheel hydraulic passage B1 formed in the pump body 10a is connected to the first front wheel cylinder FH1. The second master cylinder M2 is connected to an output hydraulic passage A2 formed in the pump body 10a, and a wheel hydraulic passage B2 formed in the pump body 10a is connected to the second front wheel cylinder FH2 and the rear wheel cylinder RH.

The oil passage connected to the first master cylinder M1 generally extends from the first master cylinder M1 to the first front wheel cylinder FH1 so that the operation force applied to the first brake operation element L1 is transmitted to the front wheel brake FB. Then oil passage connected to the second master cylinder M2 generally extends from the second master cylinder M2 to the second front wheel cylinder FH2 and the rear wheel cylinder RH, and the operation force applied to the second brake operation element L2 is transmitted to the first wheel brake FB and the rear wheel brake RB.

An inlet valve 11, an outlet valve 12, and a check valve 11a corresponding to the front wheel brake FB are provided in the oil passage connecting the first cylinder M1 to the first front wheel cylinder FH1. Two inlet valves 11, two outlet valves 12, and two check valves 11a corresponding to the front wheel brake FB and the rear wheel brake RB are provided in the oil passage connecting the second master cylinder M2, the second front wheel cylinder FH2 and the rear wheel cylinder RH.

Two reservoirs 13, two pumps 14, two suction valves 15, two discharge valves 16, two dampers 17 and two orifices 17a corresponding to the first master cylinder M1 and the second master cylinder M2 are provided in the pump body 10a. The hydraulic pressure unit 10 includes an electric motor 18 to drive two pumps 14.

The inlet valves 11 are normally open electromagnetic valves. Each of the inlet valves is disposed between the first master cylinder M1 and the first front wheel cylinder FH1 (between the output hydraulic passage A1 and the wheel hydraulic passage B1), between the second master cylinder M2 and the second front wheel cylinder FH2 (between the output hydraulic passage A2 and the wheel hydraulic passage B2), and between the second master cylinder M2 and the rear wheel cylinder RH (between the output hydraulic passage A2 and the wheel hydraulic passage B2), respectively. Since the inlet valves 11 are normally opened, the brake hydraulic pressure is permitted to be trasmitted from the first master cylinder M1 to the first front wheel cylinder FH1, and from the second master cylinder M2 to the second front wheel cylinder FH2 and the rear wheel cylinder RH. When the front wheel FT and the rear wheel RT are almost locked, the inlet valves 11 are closed by the control device 20 so that the brake hydraulic pressure applied from the first brake operation element L1 to the front wheel brake FB and from the second brake operation element L2 to the front wheel brake FB and the rear wheel brake RB is isolated.

The outlet valves 12 are normally open electromagnetic valves. Each of the outlet valves 12 is disposed between the first front wheel cylinder FH1 and the reservoir 13 (in an release passage C1) between the second front wheel cylinder FH2 and the reservoir 13 (in an release passage C2), and between the rear wheel cylinder RH and the reservoir 13 (in the release passage C2). Normally, the outlet valves 12 are closed. However, when the front wheel FT and the rear wheel RT are almost locked, the outlet valves 12 are opened by the control device 20 so that the brake fluid applied to the front wheel brake FB and the rear wheel brake RB flows into the reservoirs 13 and the hydraulic pressured applied thereto is released.

The check valves 11a connected in parallel to the inlet valve 11 permit a brake fluid to flow in a direction from the first front wheel cylinder FH1 to the first master cylinder M1, from the second front wheel cylinder FH2 to the second master cylinder M2, and from the rear wheel cylinder RH to the second master cylinder M2 only. Even when there is no input from the first brake operation element L1 and the second brake operation element L2 and the inlet valves 11 are closed, the check valves 11a permit the brake fluid to flow in a direction from the respective wheel cylinders FH1, FH2 and RH to the master cylinder M1 and M2.

The reservoirs 13 have a function to absorb the brake fluid flowing by releasing the outlet valves 12.

The pump 14 includes the suction valve 15 and the discharge valve 16, and has a function to suck out the brake fluid absorbed by the reservoir 13 and return the brake fluid to the master cylinders M1 and M2. The pump 14, the suction valve 15 and the discharge valve 16 are shown as separate parts in Fig. 2. However, in this embodiment, the suction valve 15 and the discharge valve 16 are integrally assembled in the pump 14.

The suction valve 15 is provided between the reservoir 13 and an upstream side of the pump 14, and is configured to permit the brake fluid to flow in a direction from the reservoir 13 to the upstream side of the pump 14.

The discharge valve 16 is provided between a downstream side of the pump 14 and the master cylinders M1 and M2, and is configured to permit a brake fluid to flow in a direction from the downstream side of the pump 14 to the master cylinders M1 and M2. Pulsation of the brake fluid discharged to the master cylinders M1 and M2 via the discharge valve 16 is absorbed by the damper 17 and the orifice 17a.

A delay valve 19 is provided between the second front wheel cylinder FH2 and the inlet valve 11 corresponding to the second front wheel cylinder FH2. According to its mechanical configuration, the delay valve 19 has a function to transmit the pressure applied to the brake fluid by operating the second brake operation element L2 to the rear wheel cylinder RH and the second front wheel cylinder FH2, and the pressure transmitted to the second front wheel cylinder FH2 is smaller than the pressure transmitted to the rear wheel cylinder RH. By operating the delay valve 19, a time to start an application of the brake hydraulic pressure to the second front wheel cylinder FH2 may come a little later than a time to start an application of the brake hydraulic pressure to the rear wheel cylinder RH.

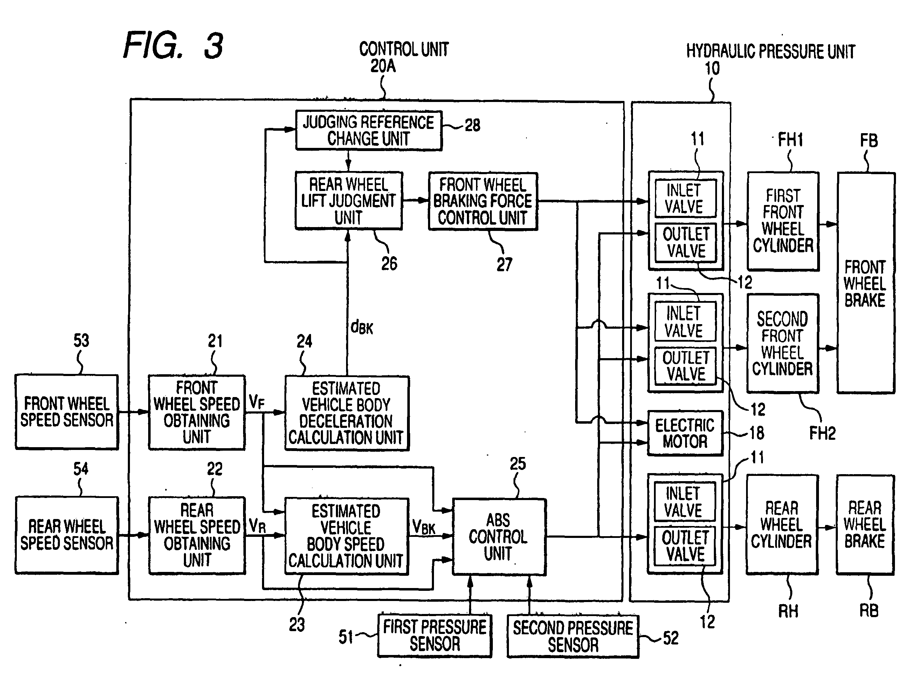

Successively, the control device 20A of the first embodiment of the present invention will be explained below. Fig. 3 is a block diagram showing a brake operating unit for motorcycle of the first embodiment of the present invention.

As shown in Fig. 3, the control device 20A includes: a front wheel speed obtaining unit 21; a rear wheel speed obtaining unit 22; an estimated motorcycle speed calculation unit 23; an estimated vehicle body deceleration calculation unit 24; an ABS control unit 25; a rear wheel lift-up judgment unit 26; a front wheel braking force control unit 27; and a judging reference change unit 28.

FRONT WHEEL SPEED OBTAINING UNIT 21

The front wheel speed obtaining unit 21 controls a front wheel speed sensor 53 and obtains front wheel speed $V_F$ detected by the front wheel speed sensor 53.

The thus obtained front wheel speed $V_F$, is outputted to the estimated motorcycle speed calculation unit 23, the estimated vehicle body deceleration calculation unit 24 and the ABS control unit 25.

REAR WHEEL SPEED OBTAINING UNIT 22

The rear wheel speed obtaining unit 22 controls the rear wheel speed sensor 54 and obtains rear wheel speed $V_R$ detected by the rear wheel speed sensor 54.

The thus obtained rear wheel speed $V_R$ is outputted to the estimated motorcycle speed calculation unit 23 and the ABS control unit 25.

ESTIMATED MOTORCYCLE SPEED CALCULATION UNIT 23

The estimated motorcycle speed calculation unit 23 calculates estimated motorcycle speed $V_{BK}$ by using front wheel speed $V_F$ and rear wheel speed $V_R$. Concerning the method of calculating estimated motorcycle speed $V_{BK}$, it is possible to use a well known calculation method. For example, estimated motorcycle speed $V_{BK}$ can be calculated by the following formula (1) according to front wheel speed $V_F$, which is detected by the front wheel speed sensor 53, and rear wheel speed $V_R$, which is detected by the rear wheel speed sensor 54.

$$V_{BK} = (V_F + V_R)/2 \quad \cdots \quad \text{Formula (1)}$$

Estimated motorcycle speed $V_{BK}$, which has been calculated, is outputted to ABS control unit 25.

ESTIMATED VEHICLE BODY DECELERATION CALCULATION UNIT 24

The estimated vehicle body deceleration calculation unit 24 calculates estimated vehicle body deceleration $d_{BK}$ by using only front wheel speed $V_F$ as a deceleration element. In other words, the estimated vehicle body deceleration calculation unit 24 calculates estimated vehicle body deceleration $d_{BK}$ without using rear wheel speed $V_R$.

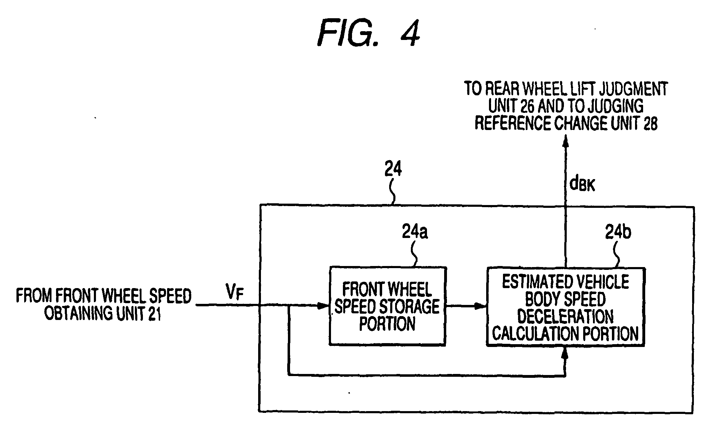

As shown in Fig. 4, the estimated vehicle body deceleration calculation unit 24 includes: a front wheel speed storage means 24a; and an estimated vehicle body deceleration calculation portion 24b.

The front wheel speed storage means 24a stores front wheel speed $V_F$ for each cycle longer than a predetermined control cycle. In the present embodiment, front wheel speed $V_F$ is stored. Then, the thus stored front wheel speed $V_F$ is renewed by a renewal cycle (for example, a renewal cycle longer than the control cycle by 5 times) which is longer than the predetermined control cycle. This renewal cycle is measured by a counter provided in the front wheel speed storage portion 24a.

The estimated vehicle body deceleration calculation portion 24b calculates estimated vehicle body deceleration $d_{BK}$ of this time by using front wheel speed $V_F$, which is obtained this time, and previous front wheel speed $V_F$ which was stored before front wheel speed $V_F$ obtained this time. In the present embodiment, estimated vehicle body deceleration $d_{BK}$ of this time is calculated by using front wheel speed $V_F$, which is obtained this time, and by using previous front wheel speed $V_F$ which was stored in a cycle right before the renewal cycle of this time.

ABS control unit 25

ABS control unit 25 judges the necessity of ABS control of controlling wheel brakes FB and RB according to front wheel speed $V_F$, rear wheel speed $V_R$ and estimated motorcycle speed $V_{BK}$. When it is judged that ABS control is necessary, by controlling the inlet valves 11, the outlet valves 12 and an amount of driving of the electric motor 18, the ABS control unit performs ABS controls (decompression control) the braking forces of wheel brakes FB and RB so as to suppress an amount of slippage of each of front wheel FT and rear wheel RT. ABS control unit 25 calculates braking forces of front wheel FT and rear wheel RT according to detection values of the first pressure sensor 51 and the second pressure sensor 52 and also according to amounts of driving of the inlet valves 11 and the outlet valves 12. That is, ABS control unit 25 calculates the front wheel cylinder pressure and the rear wheel cylinder pressure and controls so that the front wheel cylinder pressure and the rear wheel cylinder pressure can follow target values of control.

REAR WHEEL LIFT-UP JUDGMENT UNIT 26

The rear wheel lift-up judgment unit 26 judges that there is a possibility of rear wheel lift-up when a state, in which estimated vehicle body deceleration $d_{BK}$ is higher than reference deceleration $d_{TH}$, lasts for a period of time longer than reference time $T_{TH}$. The lasting time of the state, in which estimated vehicle body deceleration $d_{BK}$ is a deceleration higher than reference deceleration $d_{TH}$, is measured by a counter provided in the rear wheel lift-up judgment unit 26. The rear wheel lift-up judgment unit 26 repeatedly conducts judgment according to a predetermined control cycle. A result of judgment is outputted to the front wheel braking force control unit 27.

FRONT WHEEL BRAKING FORCE CONTROL UNIT 27

When it is judged that there is a possibility of rear wheel lift-up, the front wheel braking force control unit 27 controls amounts of driving of the inlet valves 11 and the outlet valves 12 on the front brake FB side and also controls an amount of driving of the electric motor 18, so that a braking force of front brake FB can be reduced.

JUDGING REFERENCE CHANGE UNIT 28

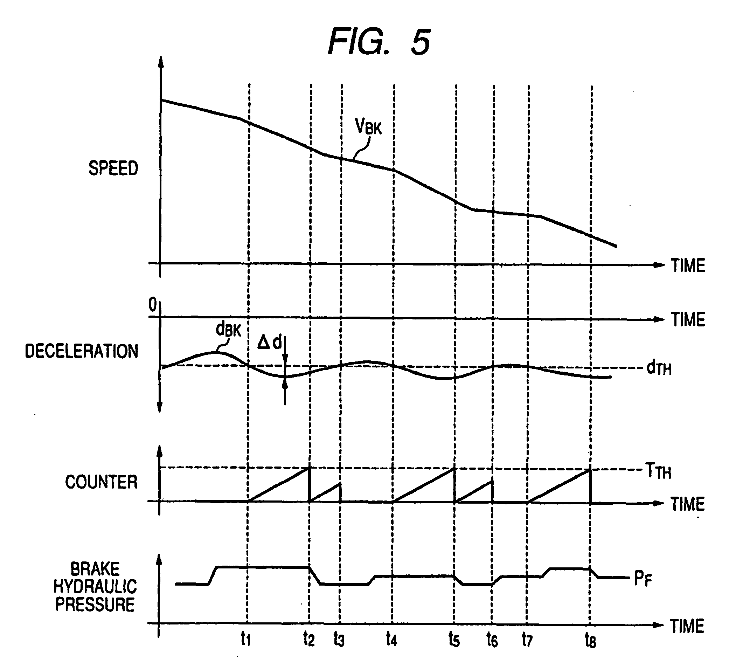

The higher deceleration a difference $\Delta d$ ($\Delta d = |d_{BK}| - |d_{TH}|$, shown in Fig. 5) between estimated vehicle body deceleration $d_{BK}$ and reference deceleration $d_{TH}$ is, the shorter the judging reference change unit 28 changes reference time $T_{TH}$. Alternatively, the higher deceleration a difference $\Delta d$ ($\Delta d = |d_{B3K}| - |d_{TH}|$, shown in Fig. 5) between estimated vehicle body deceleration $d_{BK}$ and reference deceleration $d_{TH}$ is, the lower deceleration the reference deceleration $d_{TH}$ is changed. The above change may be conducted either continuously or intermittently.

As described above, the higher the estimated vehicle body deceleration is than the reference speed, the shorter the reference time $T_{TH}$ is changed. Alternatively, reference deceleration $d_{TH}$ is changed to a low deceleration. Therefore, it is possible to early judge that the possibility of the rear wheel lift-up. Therefore, the rear wheel can be early prevented from being lifted up.

METHOD OF CONTROLLING BRAKING FORCE OF FRONT BRAKE FB

Successively, explanations will be made into a method of controlling a braking force of front wheel brake FB conducted by the control device 20A of the first embodiment. Fig. 5 is a time chart for explaining the method of controlling the braking force of front wheel brake FB conducted by the control device 20A of the first embodiment of the present invention.

As shown in Fig. 5, when a rider conducts an inputting operation on front brake FB and a braking force is generated in front brake FB, motorcycle BK1 is decelerated. Therefore, estimated motorcycle speed $V_{BK}$ is reduced.

At the time t1, estimated vehicle body deceleration $d_{BK}$ becomes higher than reference deceleration $d_{TH}$. Therefore, a counter provided in the rear wheel lift-up judgment unit 26 is operated and a period of time of lasting a state, in which estimated vehicle body deceleration $d_{BK}$ is higher than reference deceleration $d_{TH}$, is measured.

At the time t2, the lasting time becomes equal to reference time $T_{TH}$, the rear wheel lift-up judgment unit 26 judges that there is possibility of the rear wheel lift-up.

According to the result of the above judgment, the front wheel braking force control unit 27 reduces a braking force (front wheel cylinder pressure $P_F$) of front brake FB.

In this connection, when the lasting time becomes equal to reference time $T_{TH}$, the counter is reset. Concerning this matter, refer to the time $t_2$, $t_5$ and $t_8$. When estimated vehicle body deceleration $d_{BK}$ becomes equal to reference deceleration $d_{TH}$ while the counter is being operated, the counter is also reset. Concerning this matter, refer to the time $t_3$ and $t_6$.

In this connection, the reason why wheel cylinder pressure $P_F$ is increased in the drawing is that a rider has operated the brake.

In this connection, the front wheel braking force control unit 27 may be composed in such a manner that the larger $\Delta d$ is, the larger the amount of deceleration of front wheel cylinder pressure $P_F$ is increased.

The following constitution may be adopted. Motorcycle BK1 is provided with a road surface gradient sensor for detecting a road surface gradient, the control device 20A is provided with a road surface gradient obtaining unit that obtains a road surface gradient, and the rear wheel lift-up judgment unit 26 reduces reference deceleration $d_{TH}$ when a down-gradient is large and the rear wheel lift-up judgment unit 26 increases reference deceleration $d_{TH}$ when an up-gradient is large.

Further, the following constitution of the rear wheel lift-up judgment unit 26 may be adopted. The larger $\Delta d$ is, the shorter reference time $T_{TH}$ is reduced.

METHOD OF CALCULATION OF ESTIMATED VEHICLE BODY DECELERATION

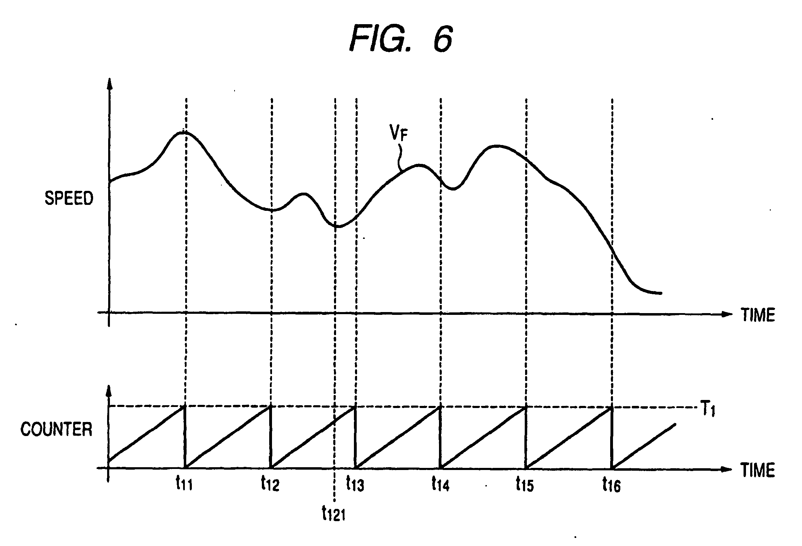

Successively, explanations will be made into a method of calculating estimated vehicle body deceleration $d_{BK}$ by the control device 20A of the first embodiment. Fig. 6 is a time chart for explaining the method of calculating estimated vehicle body deceleration $d_{BK}$ by the control device 20A of the first embodiment of the present invention.

As shown in Fig. 6, the front wheel speed storage portion 24a stores and renews front wheel speed $V_F$ for each renewal cycle $T_1$ by using a counter provided inside. In this case at time the $t_{11}$, $t_{12}$, $t_{13}$, $t_{14}$, $t_{15}$ and $t_{16}$, front wheel speed $V_F$ is renewed, and the front wheel speed storage portion 24a stores two front wheel speeds $V_F$ right before. Estimated vehicle body deceleration $d_{BK}$ at the time $t_{121}$ in the time $t_{12}$ to $t_{13}$ is calculated by using front wheel speed $V_F$ at the cycle time (the time at which the contour is reset) right before renewal cycle T1 by one, that is, estimated vehicle body deceleration $d_{BK}$ at the time $t_{121}$ in the time $t_{12}$ to $t_{13}$ is calculated by using front wheel speed $V_F$ ($t_{11}$) at the time $t_{121}$. In this case, estimated vehicle body deceleration $d_{BK}$ ($t_{121}$) at the time $t_{121}$ is obtained from the following formula (2) according to front wheel speed $V_F$ ($t_{121}$) at time $t_{121}$.

$$d_{BK}(t_{121}) = (V_F(t_{121}) - V_F(t_{11}))/(t_{121} - t_{11}) \quad \cdots \quad \text{Formula (2)}$$

As described above, according to front wheel speed $V_F$ in the past which is renewed and stored by renewal cycle $T_1$ longer than the control cycle, estimated vehicle body deceleration $d_{BK}$ is calculated according to an interval longer than renewal cycle T1 (in this case, the $t_{11}$ to $t_{121}$). Therefore, it is possible to suppress an influence of an instantaneous change in front wheel speed $V_F$ and to conduct controlling by using an appropriately stable estimated vehicle body deceleration $d_{BK}$.

According to the brake operating unit 100A for motorcycle of the first embodiment, it is judged that whether there is the possibility of the rear wheel lift-up only by front wheel speed $V_F$. Therefore, it is possible to enhance accuracy of the judgment of judging whether or not the rear wheel is lifted while an influence of rear wheel speed $V_R$, which tends to be changed by the rider's operation, is being excluded. On the other hand, ABS control is conducted by using estimated motorcycle speed $V_{BK}$ which is based on front wheel speed $V_F$ and rear wheel speed $V_R$. Accordingly, it is possible to enhance accuracy of the judgment of judging whether or not the rear wheel is lifted while accuracy of ABS control is being maintained.

SECOND EMBODIMENT

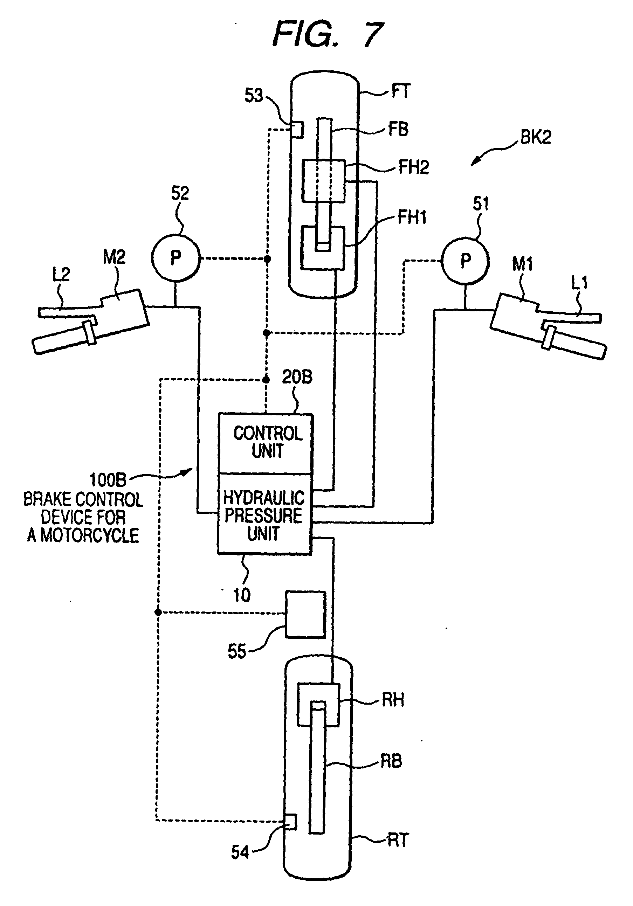

Next, concerning the motorcycle provided with a brake control device for a motorcycle of the second embodiment of the present invention, different points of the second embodiment from the first embodiment will be mainly explained below. Fig. 7 is an arrangement view showing the motorcycle provided with the brake control device for a motorcycle of the second embodiment of the present invention.

As shown in Fig. 7, the brake operating unit 100B for motorcycle of the second embodiment is mounted on motorcycle BK2. Motorcycle BK2 further includes a longitudinal direction acceleration sensor 55 for detecting a longitudinal direction acceleration of motorcycle BK2.

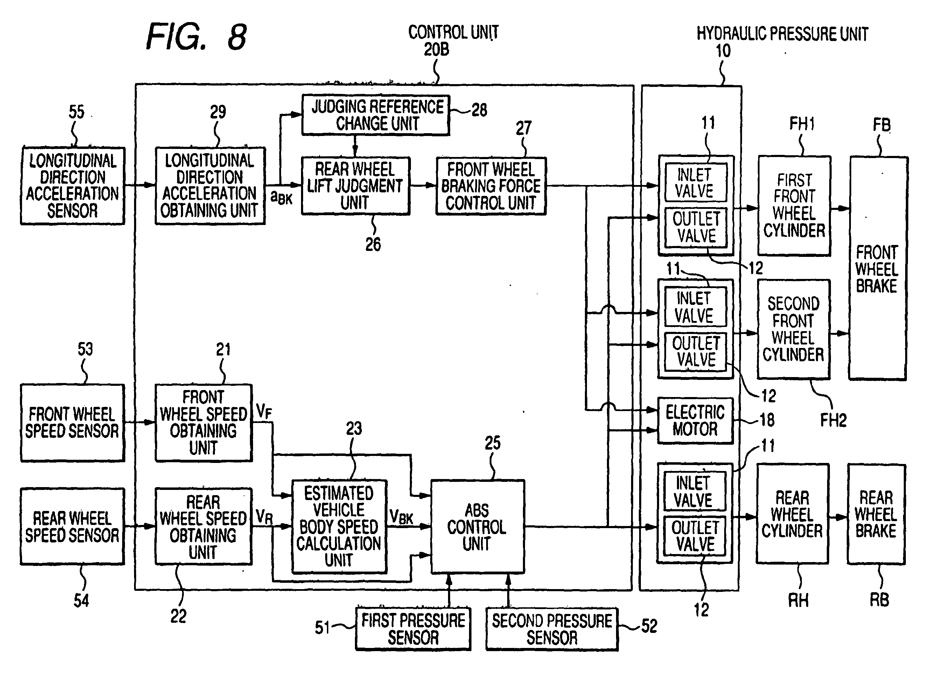

Fig. 8 is a block diagram showing a brake control device for a motorcycle of the second embodiment of the present invention.

As shown in Fig. 8, the control unit 20B includes a longitudinal direction acceleration obtaining unit 29, which is a functional portion, instead of the estimated vehicle body deceleration means 24.

The longitudinal direction acceleration obtaining unit 29 controls a longitudinal direction acceleration sensor 55 and obtains longitudinal direction acceleration $a_{BK}$ detected by the longitudinal direction acceleration sensor 55.

The thus obtained longitudinal direction acceleration $a_{BK}$ is outputted to the rear wheel lift-up judgment unit 26 and the judging reference change unit 28.

In the present embodiment, the rear wheel lift-up judgment unit 26 and the judging reference change unit 28 carry out the respective functions by using longitudinal direction acceleration $a_{BK}$ instead of body deceleration $d_{BK}$ which is used in the first embodiment.

CONTROL ON THE DOWNWARD SLOPE

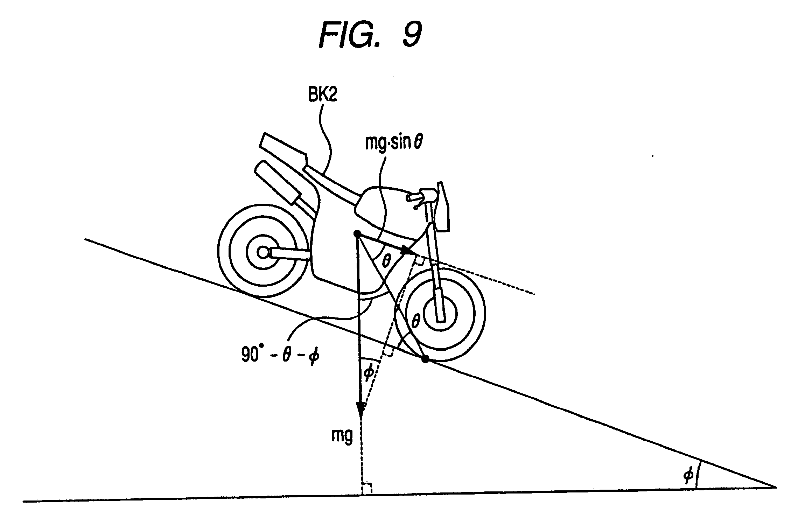

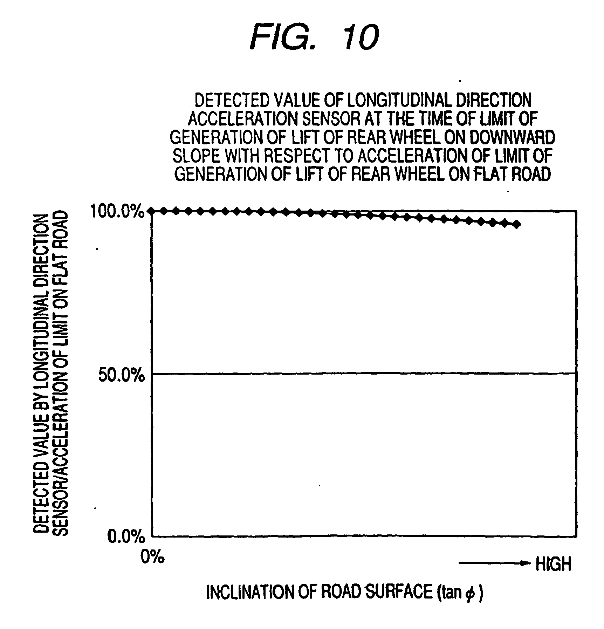

Fig. 9 is a schematic illustration showing a state in which a motorcycle of the second embodiment runs on a downward slope. Fig. 10 is a graph showing a relation between the limit acceleration of generating a rear wheel lift-up on a flat road and the detection value of the longitudinal direction acceleration sensor at the time of the limit of generating a rear wheel lift-up on a downward slope. As shown in Fig. 9, when motorcycle BK2 runs on a downward slope, the down-grade of which is $\phi$, when motorcycle BK2 runs at deceleration $d_{BK}$ on the downward slope, longitudinal direction acceleration $a_{BK}$, which is detected by the longitudinal direction acceleration sensor 55, is obtained by the following formula (3).

$$a_{BK} = d_{BK} + g \cdot \sin\phi \quad \cdots \quad \text{Formula (3)}$$

In this case, reference mark g is the gravitational acceleration. Reference mark m shown in Fig. 9 is the mass of motorcycle BK2 (and a rider).
As described above, on the downward slope, longitudinal direction acceleration $a_{BK}$, which is detected by the longitudinal direction acceleration sensor 55, is a value at which an gradient of the road surface is compensated. That is, $g \cdot \sin\phi$ is a road surface gradient compensation value.
When braking operation is conducted on a downward slope, the limit deceleration of generating a rear wheel lift-up is reduced as compared with a case in which the motorcycle is running on a flat road. That is, in order to suppress a rear wheel lift-up on the downward slope, it is necessary to set reference deceleration $d_{TH}$ at a value lower than the reference deceleration on the flat road.
However, it is impossible to judge whether motorcycle BK2 is running on a flat road or on a downward slope at present from front wheel speed $V_F$ and rear wheel speed $V_R$. Accordingly, in order to suppress a rear wheel lift-up on the downward slope, it is necessary to previously set reference deceleration $d_{TH}$ at a low value while consideration is being given to an influence of the downward slope. However, when reference deceleration $d_{TH}$ is set as described above, on the flat road, a running speed can be reduced only by a deceleration considerably lower than the limit deceleration of generating a rear wheel lift-up.
In the present embodiment, at the time of running on a downward slope, the longitudinal direction acceleration obtaining unit 29 obtains a sum of the actual deceleration in the direction of the gradient face of motorcycle BK2 and the component in the gradient face direction of the gravity (including the gravity acting on a rider) acting on motorcycle BK2. At the time of running on the downward slope, a value, which is obtained by the longitudinal direction acceleration obtaining unit 29 when motorcycle BK2 is running at the limit deceleration of generating a rear wheel lift-up, is substantially equal to a value which is obtained by the longitudinal acceleration obtaining unit 29 at the time of running at the limit deceleration of generating a rear wheel lift-up of motorcycle BK2 when motorcycle BK2 is running on the flat road. That is, a detection value, which is detected by the longitudinal direction acceleration sensor 55, is compensated by the gradient of the road surface. Accordingly, as shown in Fig. 10, even when road surface gradient $\phi$ is increase, the detection value, which is detected by the longitudinal direction acceleration sensor 55 at the time of the limit of generation of a rear wheel lift-up on a downward slope, that is, the value, which is obtained by the longitudinal direction acceleration obtaining unit 29, is seldom changed with respect to the limit acceleration of generation of a rear wheel lift-up at the time of running on the flat road. Accordingly, even when a plurality of reference deceleration $d_{TH}$ are not set corresponding to the road surface incline, it is possible to enhance accuracy of judging a rear wheel lift-up while accuracy of ABS control is being maintained. Further, a high deceleration on the flat road and a suppression of a rear wheel lift-up on the downward slope can be compatible with each other.

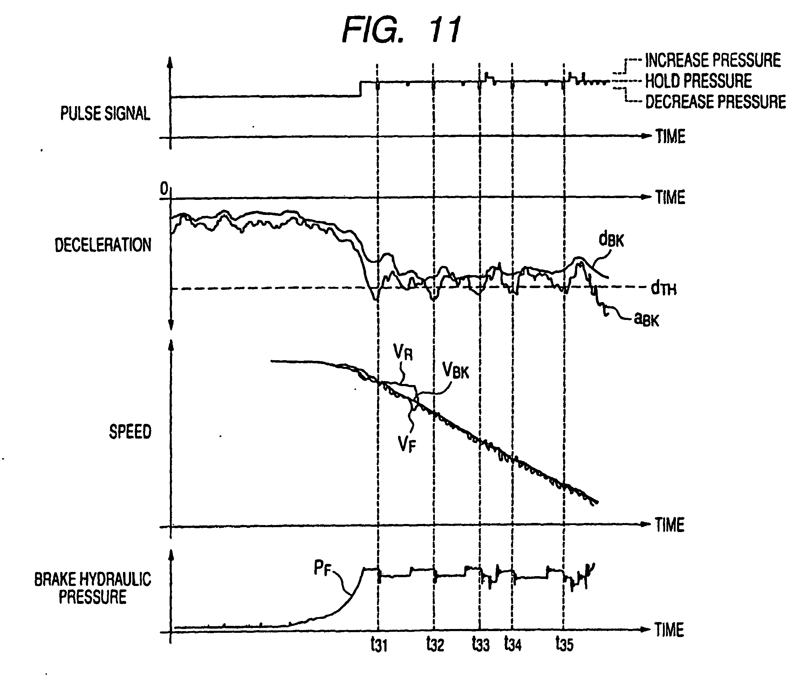

Fig. 11 is a time chart showing an example of control conducted by the control unit of the second embodiment. Fig. 11 shows an example of control when motorcycle BK runs on a downward slope, the road surface gradient of which is $\tan\phi = 10\%$.
As shown in Fig. 11, since a compensation of the road surface gradient is made for longitudinal direction acceleration $a_{BK}$, when judgment is conducted by using estimated vehicle body deceleration $d_{BK}$ calculated according to front wheel speed $V_F$, even when control does not intervene in the decompression control of cylinder pressure of front wheel FT, it is possible to conduct decompression control of wheel cylinder pressure $P_F$ of front wheel FT. Accordingly, it is possible to suppress the rear wheel from being lifted.
The embodiment of the present invention has been explained above. However, it should be noted that the present invention is not limited to the above specific embodiment but variations can be made without departing from the scope of the present invention.
While the invention has been described in connection with the exemplary embodiments, it will be obvious to those skilled in the art that various changes and modification may be made therein without departing from the present invention, and it is aimed, therefore, to cover in the appended claim all such changes and modifications as fall within the scope of the present invention.

**Claims**

1. A brake control device for a motorcycle comprising:

   a front wheel speed obtaining unit (27) that obtains a front wheel speed;
   a rear wheel speed obtaining unit (22) that obtains a rear wheel speed;
   an estimated motorcycle speed calculation unit (23) that calculates an estimated motorcycle speed by using the obtained front wheel speed and rear wheel speed;
   a longitudinal direction acceleration obtaining unit (29) that obtains a longitudinal direction acceleration of the body;
   an ABS control unit (25) that suppresses slippage of the front wheel and the rear wheel at the time of braking operation according to the estimated motorcycle speed that has been calculated; and
   a front wheel braking force control unit (27) that reduces a braking force of the front wheel when it is judged that there is the possibility of the rear wheel being lifted, **characterised in that** the brake control device further comprises a rear wheel lift-up judgment unit (26) that judges that there are possibilities of the rear wheel being lifted when a state, where the obtained longitudinal direction acceleration is higher than a reference acceleration, lasts for a period of time longer than a reference period of time; and **in that** the longitudinal direction acceleration obtaining unit (55) obtains a sum of an actual deceleration in a direction of the gradient face of the motorcycle and a component in a gradient face direction of the gravity acting on the motor cycle.

**Patentansprüche**

1. Bremssteuergerät für ein Motorrad, umfassend:

   eine Vorderradgeschwindigkeitseinholeinheit (27), die eine Vorderradgeschwindigkeit einholt;
   eine Hinterradgeschwindigkeitseinholeinheit (22), die eine Hinterradgeschwindigkeit einholt;
   eine Berechnungseinheit (23) für eine abgeschätzte Motorradgeschwindigkeit, die eine abgeschätzte Motorradgeschwindigkeit durch Verwenden der eingeholten Vorderradgeschwindigkeit und der Hinterradgeschwindigkeit berechnet;
   eine Längsrichtungsbeschleunigungseinholeinheit (29), die eine Längsrichtungsbeschleunigung des Gehäuses einholt;
   ein ABS-Steuergerät (25), das ein Rutschen des Vorderrades und des Hinterrades zum Zeitpunkt des Bremsbetriebes gemäß der abgeschätzten Motorradgeschwindigkeit, die berechnet wurde, unterdrückt; und
   eine Vorderradbremskraftsteuereinheit (27), die eine Bremskraft des Vorderrades reduziert, wenn geurteilt wird, dass die Möglichkeit besteht, dass das Hinterrad angehoben wird,

   **dadurch gekennzeichnet, dass**
   die Bremssteuereinrichtung ferner eine Hinterradanhebebeurteilungseinheit (26) umfasst, die beurteilt, dass Möglichkeiten bestehen, dass das Hinterrad angehoben ist, wenn ein Zustand, in dem die eingeholte Längsrichtungsbeschleunigung größer ist als eine Bezugsbeschleunigung, länger andauert als eine Zeitdauer, die länger ist als eine Bezugszeitdauer; und
   dass die Längsrichtungsrichtungsbeschleunigungseinholeinheit (55) eine Summe einer aktuelle Verzögerung in einer Richtung der Gradientenfläche des Motorrades und einen Bestandteil einer Gradientenflächenrichtung der Schwerkraft, die auf das Motorrad wirkt, addiert.

**Revendications**

1. Dispositif de commande de frein pour une motocyclette comprenant :

   une unité obtenant la vitesse d'une roue avant (27) qui obtient une vitesse de la roue avant ;
   une unité obtenant la vitesse d'une roue arrière (22) qui obtient une vitesse de la roue arrière :

une unité de calcul de vitesse estimée d'une motocyclette (23) qui calcule une vitesse estimée d'une motocyclette en utilisant la vitesse obtenue de la roue avant et la vitesse obtenue de la roue arrière ;

une unité obtenant l'accélération dans une direction longitudinale (29) qui obtient une accélération dans une direction longitudinale de la carrosserie ;

une unité de commande ABS (25) qui élimine un patinage de la roue avant et de la roue arrière au moment de l'opération de freinage en fonction de la vitesse estimée de la motocyclette qui a été calculée ; et

une unité de commande de force de freinage de la roue avant (27) qui réduit une force de freinage de la roue avant quand il est jugé qu'il existe une possibilité de soulèvement de la roue arrière, **caractérisé en ce que** le dispositif de commande de frein comprend en outre une unité d'évaluation de soulèvement de la roue arrière (26) qui juge qu'il est possible que la roue arrière se soulève quand un état, dans lequel l'accélération dans une direction longitudinale obtenue est supérieure à une accélération de référence, dure pendant une période de temps plus grande qu'une période de temps de référence; et **en ce que** l'unité obtenant l'accélération dans une direction longitudinale (55) obtient une somme d'une décélération réelle dans une direction de la face de gradient de la motocyclette et d'une composante dans une direction de la face de gradient de la gravité agissant sur la motocyclette.

## FIG. 1

FIG. 2

# FIG. 3

CONTROL UNIT 20A

HYDRAULIC PRESSURE UNIT 10

JUDGING REFERENCE CHANGE UNIT — 28

REAR WHEEL LIFT JUDGMENT UNIT — 26

FRONT WHEEL BRAKING FORCE CONTROL UNIT — 27

$d_{BK}$

53 — FRONT WHEEL SPEED SENSOR

21 — FRONT WHEEL SPEED OBTAINING UNIT — $V_F$

24 — ESTIMATED VEHICLE BODY DECELERATION CALCULATION UNIT

54 — REAR WHEEL SPEED SENSOR

22 — REAR WHEEL SPEED OBTAINING UNIT — $V_R$

23 — ESTIMATED VEHICLE BODY SPEED CALCULATION UNIT — $V_{BK}$

25 — ABS CONTROL UNIT

51 — FIRST PRESSURE SENSOR

52 — SECOND PRESSURE SENSOR

11 — INLET VALVE

12 — OUTLET VALVE

FH1 — FIRST FRONT WHEEL CYLINDER

FB — FRONT WHEEL BRAKE

11 — INLET VALVE

12 — OUTLET VALVE

FH2 — SECOND FRONT WHEEL CYLINDER

18 — ELECTRIC MOTOR

11 — INLET VALVE

12 — OUTLET VALVE

RH — REAR WHEEL CYLINDER

RB — REAR WHEEL BRAKE

EP 2 161 172 B1

14

EP 2 161 172 B1

## FIG. 4

TO REAR WHEEL LIFT JUDGMENT
UNIT 26 AND TO JUDGING
REFERENCE CHANGE UNIT 28

24

$d_{BK}$

24a

24b

FROM FRONT WHEEL SPEED
OBTAINING UNIT 21

$V_F$

| FRONT WHEEL SPEED STORAGE PORTION |
| ESTIMATED VEHICLE BODY SPEED DECELERATION CALCULATION PORTION |

FIG. 5

SPEED

$V_{BK}$

TIME

0

TIME

DECELERATION

$d_{BK}$

$\Delta d$

$d_{TH}$

COUNTER

$T_{TH}$

TIME

BRAKE
HYDRAULIC
PRESSURE

$P_F$

TIME

$t_1$   $t_2$  $t_3$   $t_4$   $t_5$  $t_6$   $t_7$   $t_8$

EP 2 161 172 B1

# FIG. 6

SPEED

$V_F$

TIME

COUNTER

$T_1$

TIME

$t_{11}$     $t_{12}$     $t_{13}$     $t_{14}$     $t_{15}$     $t_{16}$

$t_{121}$

EP 2 161 172 B1

# FIG. 7

FIG. 8

EP 2 161 172 B1

# FIG. 9

BK2

$mg \cdot \sin \theta$

$90° - \theta - \phi$

$\theta$

$\theta$

$\phi$

mg

$\phi$

# FIG. 10

DETECTED VALUE OF LONGITUDINAL DIRECTION
ACCELERATION SENSOR AT THE TIME OF LIMIT OF
GENERATION OF LIFT OF REAR WHEEL ON DOWNWARD
SLOPE WITH RESPECT TO ACCELERATION OF LIMIT OF
GENERATION OF LIFT OF REAR WHEEL ON FLAT ROAD

DETECTED VALUE BY LONGITUDINAL DIRECTION
SENSOR/ACCELERATION OF LIMIT ON FLAT ROAD

100.0%

50.0%

0.0%

0%                                    ────► HIGH

INCLINATION OF ROAD SURFACE (tan $\phi$)

# FIG. 11

PULSE SIGNAL

$\lceil$ — INCREASE PRESSURE
$\vdots$ — HOLD PRESSURE
$\lfloor$ — DECREASE PRESSURE

TIME

DECELERATION

0 — TIME

$d_{BK}$

$d_{TH}$

$a_{BK}$

SPEED

$V_R$

$V_{BK}$

$V_F$

TIME

BRAKE HYDRAULIC
PRESSURE

$P_F$

TIME

t31  t32  t33  t34  t35

EP 2 161 172 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002029403 A
- US 2003066720 A1
- EP 0524821 A2